# EUROPÄISCHE PATENTSCHRIFT

(11) **EP 2 664 041 B1**
(45) Veröffentlichungstag und Bekanntmachung des Hinweises auf die Patenterteilung: **29.07.2015**
(21) Anmeldenummer: 12700111.3
(22) Anmeldetag: 09.01.2012
(51) Int. Cl.: H02G 3/04, H02G 15/007

(54) **VORRICHTUNG ZUR KABEL- UND/ODER WELLROHRKLEMMUNG**
DEVICE FOR CLAMPING CABLES AND/OR CORRUGATED PIPES
DISPOSITIF DE BLOCAGE DE CÂBLES ET/OU DE TUBES ANNELÉS

(30) Priorität: 11.01.2011 DE 102011008270
(43) Veröffentlichungstag der Anmeldung: 20.11.2013
(73) Patentinhaber: KNORR-BREMSE Systeme für Nutzfahrzeuge GmbH, 80809 München (DE)
(72) Erfinder: RÖTHER, Friedbert, 74389 Cleebronn (DE); WÖRNER, Ralf, 75233 Tiefenbronn (DE)
(86) Internationale Anmeldenummer: PCT/EP2012/050240
(87) Internationale Veröffentlichungsnummer: WO 2012/095387

(56) Entgegenhaltungen:
- DE-A1-102004 011 184
- US-A- 2 712 917
- US-A- 3 023 470

## Beschreibung

Die vorliegende Erfindung bezieht sich auf eine Vorrichtung zur Kabel- und/oder Well-rohrklemmung, sowie auf einen Kabel- und/oder Wellrohrstecker zur Klemmung zumindest eines Kabels und/oder Wellrohrs an einem Fahrzeug gemäß den Hauptansprüchen.

Für eine herkömmliche Zugentlastung an einem Kabel eines Fahrzeugs ist während der Montage neben einem Schließen eines Klemmblocks an einer Abdeckung ein weiterer Arbeitsschritt des Verriegelns notwendig. Dabei wird ein Riegel als Vorreiber über eine Abdeckklappe des Klemmblocks gedreht. Dadurch ergibt sich eine schwierige Handhabung. Beim Montieren der Abdeckung wird als Fixierung ein Querriegel eingesetzt, der nachträglich montiert werden muss. Beim Schließvorgang der Abdeckhaube nach Erreichen der Endposition wird der Querriegel betätigt. Er sichert die Abdeckhaube gegen einen, durch die Kabelklemmung entstehenden Druck, der die Abdeckung wieder öffnen würde. Der Querriegel ist gegen ein ungewolltes Lösen gesichert und signalisiert dem Monteur eine richtige Montage.

Die US 2,712,917 A offenbart einen Kabelclip oder dergleichen.

Die US 3,023,470 A offenbart einen schraubenlosen Kabelclip.

Die DE 10 2004 011184 A1 offenbart einen Halter zur Halterung und Führung von Leitungsbündeln in Flugzeugen.

Es ist die Aufgabe der vorliegenden Erfindung eine verbesserte Vorrichtung zur Kabel- und/oder Wellrohrklemmung zu schaffen.

Diese Aufgabe wird durch eine Vorrichtung zur Kabel- und/oder Wellrohrklemmung, sowie einen Kabel- und/oder Wellrohrstecker zur Klemmung zumindest eines Kabels und/oder Wellrohrs an einem Fahrzeug gemäß den Hauptansprüchen gelöst.

Dieser Erfindung liegt der Gedanke zugrunde, dass eine Schließbewegung einer einteiligen Abdeckhaube mit Kabelklemmvorrichtung mit einer Verriegelungsbewegung kombniert werden kann. Damit kann während einer Montage eines Klemmblocks zur Zugentlastung zumindest eines Kabels oder Wellrohrs an einem Fahrzeug eine vereinfachte Montage ermöglicht werden. In einem Schritt des Schließens eines Klemmblocks kann ebenso eine Verriegelung des Klemmblocks vorgenommen werden. Eine elastische Feder in einen Deckel des Klemmblocks integriert kann während der Schließbewegung an einer Kante eines Gegenstücks, beispielsweise eines Wandausschnitts gespannt werden und mittels einer hinterschnittenen Federkontur die Kante in geschlossener Stellung des Klemmblocks umschließen.

Vorteilhafterweise ist es möglich, dass durch eine Kombination mehrerer Arbeitsschritte bei der Montage ein Montageergebnis schneller und sicherer erreicht werden kann. Eine Weiterentwicklung einer Steckerabdeckung mit integrierter Kabel- und Wellrohrklemmung sowie einer fertigungsoptimierten Konstruktion führt zu einer Verringerung einer Anzahl von Teilen und einer Vereinfachung der Montage. Durch ein akustisches Signal beim Einrasten des Hinterschnitts kann ein eine sichere Montage direkt erfasst werden.

Die vorliegende Erfindung schafft eine Vorrichtung zur Kabel- und/oder Wellrohrklemmung für ein Fahrzeug, die einen Grundkörper mit zumindest einem Drehpunktaufnahmeelement und zumindest einem Vorsprung aufweist, der zum Klemmen von zumindest einem Kabel oder Wellrohr ausgebildet ist, wobei insbesondere der Grundkörper einstückig ausgeführt ist, wobei die Vorrichtung zur Kabel- und/oder Wellrohrklemmung zumindest eine Rasteinrichtung zum Befestigen des Grundkörpers aufweist, wobei der Vorsprung zwischen der Rasteinrichtung und dem Drehpunktaufnahmeelement angeordnet ist.

Unter einem Grundkörper kann beispielsweise eine halbschalenförmige Abdeckhaube verstanden werden. Der Grundkörper kann beispielsweise aus federelastischem Material bestehen. Ein Drehpunktaufnahmeelement kann ein Teil eines Scharniers sein. Beispielsweise kann das Drehpunktaufnahmeelement eine hakenförmige Ausprägung sein, die ausgebildet ist, um eine beispielsweise zylinderförmige Achse oder einen Stift zumindest teilumfänglich zu hintergreifen. Unter einem Vorsprung kann beispielsweise ein Block oder eine Gruppe von Rippen verstanden werden, die auf einer Wirkfläche eine Kontur zum Klemmen beispielsweise eines Kabels und/oder Wellrohrs aufweist. Eine Rasteinrichtung kann eine Ausprägung wie eine Falle aufweisen, die nach einer Verformung und/oder Verschiebung zumindest teilweise in eine Ausgangsposition zurückkehrt, und dabei ohne erneute Verformung und/oder Verschiebung zumindest eine Bewegungsrichtung der Rasteinrichtung in einem Winkel zu der Verschiebung sperrt.

Ferner kann auch die Rasteinrichtung zumindest eine Rastnase aufweisen, die auf einer, vom Grundkörper abgewandten Seite der Rasteinrichtung angeordnet ist. Eine Rastnase kann eine keilförmige Ausprägung sein, die über eine schiefe. Ebene eine seitliche Bewegung einer Materialkante auf der Rastnase in eine Querbewegung senkrecht zur gung einer Materialkante auf der Rastnase in eine Querbewegung senkrecht zur Bewegung umwandelt. Dadurch kann mit geringem Kraftaufwand eine Schnappkraft der Feder überwunden werden. Eine derartige Ausführungsform der vorliegenden Erfindung bietet den Vorteil einer sehr sicheren Halterung der Vorrichtung im montierten Zustand.

Günstig ist es ferner, wenn sich gemäß einer Ausführungsform der vorliegenden Erfindung die Rastnase über eine Breite erstreckt, die zumindest der Hälfte der Breite der Vorrichtung entspricht. Eine derartige Ausführungsform der vorliegenden Erfindung bietet den Vorteil, dass die Rastnase sehr breit ist und beim Einsetzen erst komplett einrastet, wenn die Rastnase an beiden seitlichen Enden hinter einen entsprechenden Vorsprung geführt ist. Wird nun die Vorrichtung schief auf einem entsprechenden Aufnahmeelement aufgesetzt, kann durch die große Breite der Rastnase diese nicht hinter einer Wand einrasten und das typische Klacken erzeugen, das einem Monteur signalisiert, dass die Vorrichtung korrekt verbaut ist. Somit wird durch die vorstehende Ausführungsform der Erfindung eine Verbesserung in Bezug auf die Montagefähigkeit erreicht.

Entsprechend einer weiteren Ausführungsform der vorliegenden Erfindung kann die Rasteinrichtung eine Grifffläche zum Betätigen der Rasteinrichtung aufweisen, wobei die Grifffläche an einem, dem Grundkörper gegenüberliegenden Ende des bogenförmigen Bügels angeordnet ist. Eine Grifffläche ermöglicht eine einfache und sichere Bedienung der Vorrichtung, um einen Rastvorgang zu unterstützen oder einen Lösevorgang zu ermöglichen. Die Grifffläche kann eine Oberflächenstruktur zur Erhöhung einer Griffigkeit der Grifffläche aufweisen. Eine derartige Ausführungsform der vorliegenden Erfindung ermöglicht eine einfache Betätigung der Rasteinrichtung. Ferner kann eine solche Rasteinrichtung einen sehr stabilen und sicheren Halt in einem Steckergehäuse eines Fahrzeugsteckers bieten.

Gemäß einer Ausführungsform kann der Grundkörper eine Deckelfläche, sowie zumindest zwei Seitenwände aufweisen, wobei die Seitenwände unter einem Winkel an die Deckelfläche anschließen und auf gegenüberliegenden Seiten der Deckelfläche beispielsweise symmetrisch zu einer Mittelachse des Grundkörpers angeordnet sind. Die Deckelfläche und die Seitenwände können plane Elemente sein. Durch eine geschlossene Deckelfläche kann der Grundkörper Umwelteinflüsse von einer Steckerverbindung abschirmen. Eine derartige Ausführungsform der vorliegenden Erfindung bietet den Vorteil einer vorteilhaften Kombination der Sicherungsfunktion der Vorrichtung bei der Befestigung eines Kabels oder eines Wellrohres, wobei zugleich auch die Vorrichtung als Abdeckung des Steckergehäuses verwendbar ist. Auf diese Weise kann mit einfachen Mitteln eine kostengünstige Umhüllung eines Steckers für einen Verbindung zwischen Komponenten eines Fahrzeugs sichergestellt werden.

In einer weiteren Ausführungsform kann die Deckelfläche zwei Führungselemente zum Führen der Rasteinrichtung aufweisen, wobei die Führungselemente an der Seite der Deckelfläche angeordnet sind, an welcher der bogenförmige Bügel angeordnet ist, und wobei die Führungselemente seitlich an die Rasteinrichtung anschließen. Dadurch kann eine seitliche Ausweichbewegung der Rasteinrichtung verhindert werden.

In einer zusätzlichen Ausführungsform der vorliegenden Erfindung kann das Drehpunktaufnahmeelenient aus zumindest zwei hakenförmigen Lagern bestehen, die je an einer der Deckelfläche gegenüberliegenden Kante einer der Seitenwände angeordnet sind. Eine derartige Ausführungsform der vorliegenden Erfindung bietet den Vorteil einer einfachen, wirkungsvollen und kostengünstigen Möglichkeit zur Ausbildung eines Drehpunktaufnahmeelements.

Die vorliegende Erfindung schafft ferner einen Kabel- und/oder Wellrohrhalter für ein Fahrzeug, wobei der Kabel- und/oder Wellrohrhalter eine Vorrichtung zur Kabel- und/oder Wellrohrklemmung gemäß dem hier vorgestellten Ansatz aufweist. Weiterhin umfasst der Kabel- und/oder Wellrohrstecker eine Halterwand mit einer Kante zum Verrasten der Rasteinrichtung, sowie zumindest einen Stift, der ausgebildet ist, um vom Drehpunktaufnahmeelement aufgenommen zu werden, wobei die Vorrichtung zur Kabel- und/oder Wellrohrklemmung um den Stift drehbar gelagert ist.; Weiterhin umfasst der Kabel- und/oder Wellrohrstecker einen Auflageblock, der zum Klemmen von zumindest einem Kabel oder Wellrohr ausgebildet ist, wobei der Auflageblock zusammen mit dem Vorsprung, in einer verrasteten Position zumindest ein Kabel und/oder zumindest ein Wellrohr einklemmt.

Unter einer Steckerwand mit einer Kante kann ein Vorsprung verstanden werden, hinter der die Rasteinrichtung beim Verrasten einschnappen kann. Ein Stift oder eine Achse kann als Achsende oder durchgehende Achse ausgeführt sein. Ein Auflageblock kann wie der Vorsprung eine Wirkfläche aufweisen, die zusammen mit der Wirkfläche des Vorsprungs bei einer Position in einer bestimmten Nähe zueinander eine Klemmwirkung für zumindest ein Kabel und/oder Wellrohr bewirkt.

Ein günstiges Ausführungsbeispiel der vorliegenden Erfindung werden nachfolgend Bezug nehmend auf die beiliegenden Zeichnungen näher erläutert. Es zeigen:
- Fig. 1: eine Frontdarstellung einer Vorrichtung zur Kabel- und/oder Wellrohrklemmung gemäß dem Ausführungsbeispiel der vorliegenden Erfindung; und
- Fig. 2: eine Schnittdarstellung eines Kabel- und/oder Wellrohrsteckers gemäß dem Ausführungsbeispiel der vorliegenden Erfindung.

In der nachfolgenden Beschreibung der bevorzugten Ausführungsbeispiele der vorliegenden Erfindung werden für die in den verschiedenen Zeichnungen dargestellten und ähnlich wirkenden Elemente gleiche oder ähnliche Bezugszeichen verwendet, wobei eine wiederholte Beschreibung dieser Elemente weggelassen wird.

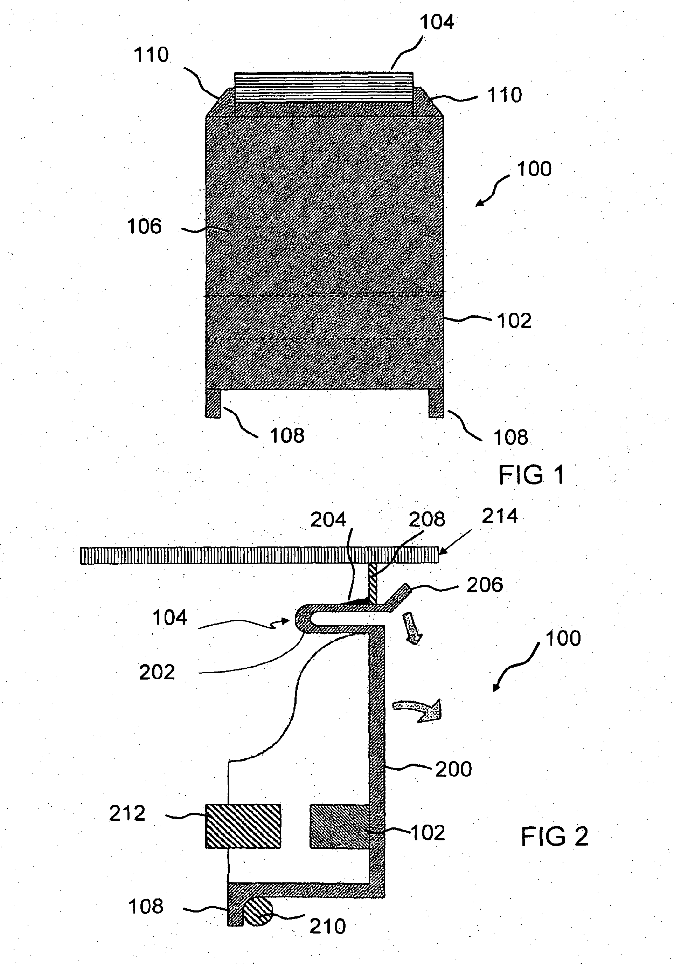

Bei heutigen Nutzfahrzeugen besteht die Bremsanlage aus mehreren mechatronischen Komponenten. Diese Komponenten sind meist mikroprozessorgesteuert und benötigen neben den mechanischen Schnittstellen wie z.B. Druckluftanschlüsse auch immer mehr elektrische Schnittstellen. Zum Schutz vor Umwelteinflüssen und mechanischen Belastungen werden diese Schnittstellen, die in der Regel als Steckkontakte ausgeführt sind, abgedeckt. Weiterhin sollen die energieführenden und signalführenden Elemente, beispielsweise Kupferkabel, gegen äußere mechanische Belastungen im Bereich der Schnittstellen entlastet werden. Diese Funktion wird von einer so genannten Zugentlastung durch eine Abdeckhaube 100 gewährleistet, die durch eine Schließbewegung eine Kabelklemmung erzeugt, wie sie in der Fig. 1 dargestellt ist. Fig. 1 zeigt dabei eine Frontdarstellung einer Vorrichtung zur Kabel- und/oder Wellrohrklemmung gemäß einem Ausführungsbeispiel der vorliegenden Erfindung.

Die Abdeckhaube 100 ist für eine gute Handhabung effizient gestaltet. Die Abdeckhaube 100 besteht aus einem Teil und beinhaltet eine Geometrie in Form eines Vorsprungs 102 zur Kabelklemmung sowie einen Verriegelungsmechanismus 104, der die Abdeckhaube 100 sicher in einer geschlossenen Position fixiert. Eine detailliertere Darstellung des Verriegelungsmechanismus erfolgt in Fig. 2. Durch den Verriegelungsmechanismus bzw. die Verriegelungsgeometrie 104 wird eine verbesserte Handhabung ermöglicht, da ein Querriegel entfällt und somit eine zweite separate Betätigung nach dem Einbau der Abdeckhaube nicht notwendig ist. Weiterhin wird ein akustisches klackendes Signal "beim Einrasten generiert werden, welches dem Monteur signalisiert, dass die Montage der Abdeckhaube 100 am Modul richtig erfolgt ist.

Die Abdeckhaube 100 weist eine ebene, rechteckige Deckelfläche 106 auf. Senkrecht zu der Deckelfläche 106 sind entlang der längeren Kanten des Rechtecks zwei Seitenwände angeordnet. An einer der kürzeren Seiten des Rechtecks schließt an die Deckelfläche 106 der Verriegelungsmechanismus 104 an. Die Seitenwände sind mit einer ersten Kante mit der Deckelfläche 106 verbunden. Die Seitenwände weisen an einem ersten Ende je eine S-förmig geschwungene Kontur auf, die von einer, der ersten Kante gegenüberliegenden, zweiten Kante bis zur Deckelfläche 106 verläuft. Dabei erreicht die Kontur die Deckelfläche 106 auf Höhe des Verriegelungsmechanismus 104. An einem zweiten Ende, das dem ersten Ende gegenüberliegt, weisen die Seitenwände je ein Drehpunktaufnahmeelement 108 auf. Die Drehpunktaufnahmeelemente 108 stehen an der zweiten Kante der Seitenwände über die Seitenwände in einer Erstreckungsrichtung der Seitenwände über. Die Drehpunktaufnahmeelemente 108 sind L-förmig mit einer Verrundung in der Ecke des L ausgeführt. Die Drehpunktaufnahmeelemente 108 sind dazu ausgebildet eine, Stift, eine Achse oder einen Achsstummel aufzunehmen und eine Drehung der Abdeckhaube 100 um die Erstreckungsachse dieses Stifts zu ermöglichen.

Der Verriegelungsmechanismus 104 besteht aus einer U-förmigen Feder aus federelastischem Material wie beispielsweise Kunststoff und ist an einem ersten Ende der Feder senkrecht mit der Deckelfläche 106 verbunden. Ein zweites Ende der Feder, das dem ersten Ende der Feder gegenüberliegt, ist in einer Erstreckungsebene der Deckelfläche 106 angeordnet. Die Feder erstreckt sich näherungsweise halb so weit von der Deckelfläche 106 weg, wie die Seitenwände. An dem zweiten Ende der Feder weist der Verriegelungsmechanismus 104 eine Grifffläche zum Betätigen des Verriegelungsmechanismus 104 auf. Die Grifffläche ist mit der U-förmigen Feder in einem Winkel von annähernd 45° verbunden und weist auf zumindest einer Oberfläche eine Riffelung auf. Die Grifffläche steht gegenüber der U-förmigen Feder über die Erstreckungsebene der Deckelfläche 106 über. Am zweiten Ende der Feder weist der Verriegelungsmechanismus 104 keilförmige Rastnasen mit einer steilen und einer flachen Seite auf, die während der Befestigung der Abdeckhaube 100 mit der flachen Seite über eine Materialkante des Moduls gleiten können. Dabei wird die Feder gespannt. Wenn die Rastnase über die Materialkannte geglitten ist, wird die Feder zumindest teilweise entspannt und ein Hinterschnitt auf der steilen Seite der Rastnasen greift um die Materialkante und verhindert ein ungewolltes Lösen der Abdeckhaube 100.

Eine Spannungs- und Entspannungsbewegung des Verriegelungsmechanismus 104 wird seitlich durch zwei Führungselemente 110 geführt. Die Führungselemente 110 stehen über die Deckfläche 106 in der Erstreckungsebene der Deckfläche 106 über. Die Führungselemente 110 weisen eine näherungsweise dreieckige Form auf. Die Geometrie bzw. der Vorsprung 102 zur Kabelklemmung erstreckt sich zwischen dem Verriegelungsmechanismus 104 und den Drehpunktaufnahmeelementen 108 in Richtung der Seitenwände von der Deckelfläche 106 weg. Der Vorsprung 102 zur Kabelklemmung erstreckt sich zwischen den Seitenwänden senkrecht zu den Seitenwänden. Der Vorsprung 102 zur Kabelklemmung weist eine geringere Höhe als die Seitenwände und die Feder auf.

Fig. 2 zeigt eine Schnittdarstellung eines Kabel- und/oder Wellrohrterminal gemäß einem Ausführungsbeispiel der vorliegenden Erfindung. Das Kabel- und/oder Wellrohrterminal dient zur Klemmung zumindest eines Kabels und/oder Wellrohrs an einem Fahrzeug oder eines Steckers des Fahrzeugs. Die rechteckige, halbschalenförmiige Abdeckung 100, ist aus einem federelastischen Material gefertigt, wobei die Abdeckung ein Deckelteil 200 als Grundkörper der Vorrichtung zur Kabel- und/oder Wellrohrpressung aufweist. An einer ersten Seite des Deckelteils 200 befinden sich die bogenförmige Bügel 202 mit Rastnasen 204 die als Feder wirken, welche eine Rastfunktion ermöglicht. Freie Enden der Bügel bilden eine Grifffläche 206 aus. An einem zweiten Ende der Abdeckung 100 befindet sich eine Drehpunktaufnahme 108, an der die Abdeckhaube 100 eingehängt und nach vorne geschwenkt werden kann. Zwischen Drehpunkt und bogenförmigem Bügel ist eine Geometrie bzw. ein Vorsprung 102 zur Kabelklemmung bzw. Zugentlastung integriert. In einem Modul, an dem die Abdeckung 100 montiert werden soll, befindet sich eine zum Rastbügel 104 passende Steckerwand mit einer Kante 208. Die Orientierung des Vorsprungs ist auf einer Seite der der Abdeckung 100 angeordnet, die beim Montieren der Abdeckung 100 an das Steckergehäuse hin gepresst wird. Beim Montagevorgang wird zunächst das Drehpunktaufnahmeelement 108 mit einem Stift 210 in Eingriff gebracht, der in der Fig. 2 durch eine grobe Schraffur gekennzeichnet ist, um einen Schnittbereich durch ein Element des Steckers darzustellen. Nach dem Einhacken des Drehpunktaufnahmeelementes hinter dem Stift 210 wird die Vorrichtung 100 gegen den Uhrzeigersinn gedreht. Zum Verrasten des Grundelementes 200 an der Kante der Steckerwand 208 kann einerseits der Griff des Verriegelungsmechanismus 104 in Richtung des Grundelementes 200 gedrückt werden und die Rastnase 204 an der Kante der Seitenwand 208 vorbei hinter die Kante der Seitenwand 208 geschoben werden und dort wieder freigegeben werden. Alternativ kann auch die Rasteinrichtung derart an die Kante 208 gedrückt werden, dass die Rastnase 204 durch einen Druck von der Kante in Richtung des Grundelements 200 gedrückt wird und hinter der Kante 208 einrastet. Auf diese Weise wird die Vorrichtung 100 sicher in der Endposition arretiert. Beim Hindrücken der Vorrichtung 100 an die Kante 208 wird dabei ein in Fig. 2 nicht dargestelltes Kabel oder ein in der Fig. 2 nicht dargestelltes Wellrohr zwischen einem am Steckergehäuse befestigten Auflageblock 212 und dem Vorsprung eingeklemmt, sodass eine Zugentlastung des Kabels durch die Klemmung des Kabels zwischen dem Auflageblock 212 und dem Vorsprung 102 realisiert wird. Weiterhin werden durch die vorstehend vorgestellte Vorrichtung eine sehr einfache Kombination der Abdeckung des Inneren des Steckers sowie der sicheren Fixierung des Vorsprungs zur Umsetzung der Zugentlastungsfunktion möglich. Weiterhin kann auch die Rastnase 206 von oben durch ein Schutzelement oder Bauteil 214 geschützt sein.

### Bezugszeichenliste

- 100: Abdeckhaube
- 102: Kabelklemmung
- 104: Verriegelungsmechanismus
- 106: Deckelfläche
- 108: Drehpunktaufnahmeelement
- 110: Führungselemente
- 200: Grundkörper, Deckelteil
- 202: Bügel
- 204: Rastnase
- 206: Grifffläche
- 208: Steckerwand mit Kante
- 210: Stift
- 212: Auflageblock
- 214: Schutzelement, Bauteil

## Patentansprüche

1. Vorrichtung (100) zur Kabel- und/oder Wellrohrklemmung in der Form einer halbschalenförmigen Abdeckhaube, die folgende Merkmale aufweist:
ein Deckelteil (200) mit zumindest einem Drehpunktaufnahmeelement (108) und zumindest einem Vorsprung (102), der zum Klemmen von zumindest einem Kabel oder Wellrohr ausgebildet ist, wobei das Deckelteil (200) eine ebene, rechteckige Deckelfläche (106), sowie entlang der längeren Kanten der rechteckigen Deckelfläche (106) zumindest zwei Seitenwände aufweist, wobei die Seitenwände unter einem Winkel an die Deckelfläche (106) anschließen und auf gegenüberliegenden Seiten der Deckelfläche (106) des Deckelteils (200) angeordnet sind; und
zumindest eine Rasteinrichtung (104) zum Befestigen des Deckelteils (200), wobei der Vorsprung (102) zwischen der Rasteinrichtung (104) und dem Drehpunktaufnahmeelement (108) angeordnet ist.

2. Vorrichtung (100) gemäß Anspruch 1, bei der die Rasteinrichtung (104) zumindest eine Rastnase (204) aufweist, die auf einer, vom Vorsprung (102) abgewandten Seite der Rasteinrichtung (104) angeordnet ist.

3. Vorrichtung (100) gemäß Anspruch 2, bei der sich die Rastnase (204) über eine Breite erstreckt, die zumindest der Hälfte der Breite der Vorrichtung (100) entspricht.

4. Vorrichtung (100) gemäß einem der vorangegangenen Ansprüche, bei der die Rasteinrichtung (104) eine Grifffläche (206) zum Betätigen der Rasteinrichtung (104) aufweist, wobei die Grifffläche an einem, des Deckelteils (200) gegenüberliegenden Ende des bogenförmigen Bügels (202) angeordnet ist.

5. Vorrichtung (100) gemäß Anspruch 4, bei der die Deckelfläche (106) zwei Führungselemente (110) zum Führen der Rasteinrichtung (104) aufweist, wobei die Führungs-elemente (110) an der Seite der Deckelfläche (106) angeordnet sind, an welcher der bogenförmige Bügel (202) angeordnet ist, und wobei die Führungselemente (110) seitlich an die Rasteinrichtung (104) anschließen.

6. Vorrichtung (100) gemäß einem der Ansprüche 4, bei der das Drehpunktaufnahmeelement (108) aus zumindest zwei hakenförmigen Lagern besteht, die je an einer der Deckelfläche (106) gegenüberliegenden Kante einer der Seitenwände angeordnet sind.

7. Kabel- und/oder Wellrohrhalter für ein Fahrzeug, wobei der Kabel- und/oder Wellrohrhalter folgende Merkmale aufweist:
eine Vorrichtung (100) zur Kabel- und/oder Wellrohrklemmung gemäß einem der vorangegangenen Ansprüche;
eine Halterwand (208) mit einer Kante zum Verrasten der Rasteinrichtung (104);
zumindest einem Stift (210), der ausgebildet ist, um vom Drehpunktaufnahmeelement (108) aufgenommen zu werden, wobei die Vorrichtung (100) zur Kabel- und/oder Wellrohrklemmung um den Stift (210) drehbar gelagert ist; und
ein Auflageblock (210), der zum Klemmen von zumindest einem Kabel oder Wellrohr ausgebildet ist, wobei der Auflageblock (210) zusammen mit dem Vorsprung (102), in einer verrasteten Position, zumindest ein Kabel und/oder zumindest ein Wellrohr einklemmt.

8. Vorrichtung gemäß einem der vorangegangenen Ansprüche, **dadurch gekennzeichnet, dass** eine Betätigungseinrichtung der Rastnase (204) in der Art angeordnet ist, dass sie von einem anderen Bauteil (214) von oben gegen ungewollte Betätigung geschützt wird.

## Claims

1. Device (100) in the form of a half-shell-like covering hood for clamping cables and/or corrugated pipes which has the following features:
a cover member (200) having at least one pivot location receiving element (108) and at least one projection (102), which is formed to clamp at least one cable or corrugated pipe, wherein the cover member (200) has a planar rectangular covering face (106), and at least two side walls along the longer edges of the rectangular covering face (106), wherein the side walls adjoin the covering face (106) at an angle and are arranged at opposing sides of the covering face (106) of the cover member (200); and
at least one catch device (104) for securing the cover member (200), wherein the projection (102) is arranged between the catch device (104) and the pivot location receiving element (108).

2. Device (100) according to Claim 1, wherein the catch device (104) has at least one catch projection (204) which is arranged at a side of the catch device (104) remote from the projection (102).

3. Device (100) according to Claim 2, wherein the catch projection (204) extends over a width which corresponds to at least half of the width of the device (100).

4. Device (100) according to one of the preceding claims, wherein the catch device (104) has a gripping face (206) for actuating the catch device (104), wherein the gripping face is arranged at an end of the arcuate curved member (202) opposite the cover member (200).

5. Device (100) according to Claim 4, wherein the covering face (106) has two guiding elements (110) for guiding the catch device (104), wherein the guiding elements (110) are arranged at the side of the covering face (106) at which the arcuate curved member (202) is arranged and wherein the guiding elements (110) laterally adjoin the catch device (104).

6. Device (100) according to Claim 4, wherein the pivot location receiving element (108) comprises at least two hook-like bearings which are each arranged at an edge of one of the side walls opposite the covering face (106).

7. Cable and/or corrugated pipe holder for a vehicle, wherein the cable and/or corrugated pipe holder has the following features:
a device (100) for clamping cables and/or corrugated pipes according to one of the preceding claims;
a retaining wall (208) having an edge for engaging the catch device (104);
at least one pin (210) which is constructed to be received by the pivot location receiving element (108), wherein the device (100) for clamping cables and/or corrugated pipes is supported rotatably about the pin (210); and
a support block (210), which is constructed to clamp at least one cable or corrugated pipe, wherein the support block (210) together with the projection (102) in an engaged position clamps at least one cable and/or at least one corrugated pipe.

8. Device according to one of the preceding claims, **characterized in that** an actuation device of the catch projection (204) is arranged in such a manner that it is protected from above against unintentional actuation by another component (214).

## Revendications

1. Dispositif (100) de serrage de câbles et/ou de tubes annelés, sous la forme d'un capot de protection en forme de cuvette, qui présente les caractéristiques suivantes :
une partie de couvercle (200) à au moins un élément récepteur de pivot (108) et au moins une saillie (102), qui est configurée pour le serrage d'au moins un câble ou un tube annelé, à ladite partie de couvercle (200) comprenant une surface de couvercle plane, rectangulaire (106), ainsi qu'au moins deux parois latérales le long des bords plus longues de ladite surface de couvercle rectangulaire (106), auxdites parois latérales se joignant à un angle à ladite surface de couvercle (106) et étant disposées aux côtés opposés de ladite surface de couvercle (106) de ladite partie de couvercle (200) ; et
au moins un moyen d'encliquetage (104) pour la fixation de ladite partie de couvercle (200), à ladite saillie (102) étant disposé entre ledit moyen d'encliquetage (104) et ledit élément récepteur de pivot (108).

2. Dispositif (100) selon la revendication 1, dans lequel ledit moyen d'encliquetage (104) présente au moins un ergot d'encliquetage (204), qui est disposé d'un côté à l'opposé à ladite saillie (102) dudit moyen d'encliquetage (104).

3. Dispositif (100) selon la revendication 2, dans lequel ledit ergot d'encliquetage (204) s'étend sur une largeur, qui correspond au moins à la moitié de la largeur du dispositif (100).

4. Dispositif (100) selon une quelconque des revendications précédentes, dans lequel ledit moyen d'encliquetage (104) comprend une surface de prise (206) à actionner ledit moyen d'encliquetage (104), à ladite surface de prise étant disposée à une extrémité de l'étrier en arc (202) opposée à ladite partie de couvercle (200).

5. Dispositif (100) selon la revendication 4, dans lequel ladite surface de couvercle (106) comprend deux éléments de guidage (1010) à guider ledit moyen d'encliquetage (104), auxdits éléments de guidage (110) étant disposés au côté de ladite surface de couvercle (106), auquel est disposé ledit étrier en arc (202), et auxdits éléments de guidage se joignant latéralement audit moyen d'encliquetage (104).

6. Dispositif (100) selon une quelconque des revendications 4 à 5, dans lequel ledit élément récepteur de pivot (108) consiste en au moins deux logements en crochet, dont chacun est disposé à un bord d'une desdites parois latérales, qui se trouve en opposé à ladite face de couvercle (106).

7. Support de câbles et/ou de tubes annelés pour un véhicule, le support de câbles et/ou de tubes annelés présentant les caractéristiques suivantes :
un dispositif (100) de serrage de câbles et/ou de tubes annelés selon une quelconque des revendications précédentes ;
une paroi de support (208) à un bord pour l'encliquetage dudit moyen d'encliquetage (104) ;
au moins une broche (210), qui est configurée à être reçue dans ledit élément récepteur de pivot (108), au dispositif (100) de serrage de câbles et/ou de tubes annelés étant logé de manière rotative autour de ladite broche (210) ;
un bloc d'appui (210) configuré pour le serrage d'au moins un câble ou d'un tube annelé, ledit bloc d'appui (210), ensemble avec ladite saillie (102), serrant au moins un câble et/ou au moins un tube annelé en une position verrouillée.

8. Dispositif selon une quelconque des revendications précédentes, **caractérisé en ce qu'**un moyen d'actionnement dudit ergot d'encliquetage (204) est disposé de telle façon, qu'il soit protégé par un autre composant (214) du haut contre l'actionnement involontaire.
